# EUROPEAN PATENT SPECIFICATION

(11) **EP 3 048 337 B1**
(45) Date of publication and mention of the grant of the patent: **10.06.2020**
(21) Application number: 14855184.9
(22) Date of filing: 21.10.2014
(51) Int. Cl.: F16H 25/24, F16H 25/22

(54) **SEAL FOR BALL-SCREW DEVICE**
DICHTUNG FÜR EINE KUGELGEWINDETRIEB-VORRICHTUNG
JOINT POUR DISPOSITIF DE VIS A BILLES

(30) Priority: 22.10.2013 JP 2013219474
(43) Date of publication of application: 27.07.2016
(73) Proprietor: NSK Ltd., Tokyo 141-8560 (JP)
(72) Inventor: OKA, Keitaro, Fujisawa-shi Kanagawa 252-0811 (JP)
(74) Representative: Klingseisen, Franz
(86) International application number: PCT/JP2014/005345
(87) International publication number: WO 2015/059923

(56) References cited:
- WO-A1-2013/011694
- DE-U1-202011 108 136
- JP-A- H06 213 299
- JP-A- 2002 364 726
- JP-A- 2012 007 685
- JP-A- 2013 024 330

## Description

### Technical Field

The present invention relates to a ball screw actuator comprising a seal.

### Background Art

Conventionally, a ball screw device has been known as a mechanism that converts rotational motion to linear motion. A ball screw device is provided with a threaded shaft in which a helical rolling groove is formed on its outer peripheral surface, and a nut in which a helical rolling groove, which faces the rolling groove of the threaded shaft, is formed on its inner peripheral surface. The nut is screwed into an outer peripheral side of the threaded shaft through a number of balls interposed between both of the rolling grooves, and is able to move in an axis direction of the threaded shaft by rotating the threaded shaft. Then, in such a ball screw device, a seal member (herein after, sometimes referred to as a seal) is often provided in both end parts of the nut in an axis direction. This seal member is fitted onto the nut, prevents dust and so on from entering between the nut and the threaded shaft from outside, and also prevents lubricant, which is present between the nut and the threaded shaft, from leaking outside.

Here, since the rolling groove is formed on the outer peripheral surface of the threaded shaft, a sectional shape of the threaded shaft in a direction perpendicular to the axis direction is not a simple circular shape. Therefore, due to an error in shape accuracy or a mounting error of the seal member, a gap is likely to be generated between the threaded shaft and the seal member, and, in order to prevent this, enormous efforts are required for management and adjustment of precision of the seal member. When a tightening margin of the seal member with respect to the threaded shaft is formed to be large, it is possible to absorb an error in shape accuracy and a mounting error and restrain generation of such a gap, but contact pressure of the seal member to the threaded shaft becomes high at the same time. This means that frictional resistance of the seal member to the threaded shaft is increased. Then, operation performance of the ball screw device could be deteriorated. Further, heat generation due to friction is increased, which becomes one of causes of a decrease in accuracy of positioning by the ball screw device.

Thus, in order to improve sealability of lubricant, a seal member is proposed, in which an inner peripheral surface is made into a noncircular shape that resembles a sectional shape of a threaded shaft (a range that is in contact with a rolling groove and a range that is in contact with a land part between the rolling grooves) (see Patent Literature 1 and Patent Literature 2). Further, in order to satisfy sealability in a case where a rolling groove of a threaded shaft is made into a gothic arc shape (not a single circular arc), a technique is proposed to improve sealability while a ball screw device is operating, by making a shape of a tip part (lip) of an inner peripheral side of a seal member into a spherical shape. JP2002 364726 A discloses a ball screw device comprising a foreign material removing member and a seal member . These members also have circular inner peripheries having deformed circular shapes in conformity with the sectional shape of the screw shaft. They are further provided with positioning holes so as to be overlapped to each other in a state shifted in circumferential directions thereof at a predetermined angle.

### Citation List

### Patent Literatures

PTL 1: JP H9-303517 A
PTL 2: JP 2006-300192 A

### Summary of Invention

### Technical Problem

As stated above, a conventional seal member tends to provide a solution by a shape of the seal member, for example, by considering its inner peripheral shape and a shape of its tip part on an inner peripheral side.

However, since operations of arranging the seal member in the nut and matching a phase with that of a threaded shaft are extremely time-consuming, the shape of the inner peripheral surface of the seal member is made into a non-circular shape, and, as a result, there were some instances where a mounting error and mounting failure of the seal member happened.

Specifically, it is difficult for an operator to as certain the non-circular shape of the inner peripheral surface of the seal member, and phase precision when the seal member is combined with the threaded shaft was dependent on a sense of an operator.

Therefore, there has been a room for improvement because a mounting error and mounting failure of the seal member could cause damage to the seal member and lubrication failure such as leakage of grease.

Thus, the present invention has been accomplished by focusing on the above-mentioned problem, and its object is to provide a seal for a ball screw device, which is able to restrain damage to a seal member and leakage of grease.

### Solution to Problem

One aspect of a seal for a ball screw device in order to achieve the above-mentioned object is provided in a ball screw device according to claim 1.

Here, in the seal for a ball screw device, the guide part may be provided in both end surfaces of the seal member in the axis direction.

Further, in the seal for a ball screw device, the guide part may be provided continuously in a circumferential direction of the threaded shaft.
Yet further, in the seal for a ball screw device, the guide parts may be provided in a plurality of lines in the circumferential direction of the threaded shaft.

### Advantageous Effects of Invention

According to one aspect of the present invention, it is possible to provide a seal for a ball screw device, which is able to restrain damage to a seal member and leakage of grease.

### Brief Description of Drawings

FIG. 1 is a partial sectional view of a main part, illustrating a structure of a ball screw device in an embodiment of a seal for a ball screw device;
FIGS. 2A and 2B are views illustrating a structure in an embodiment of a seal for a ball screw device, where FIG. 2A is a front view and FIG. 2B is a sectional view;
FIGS. 3A to 3D are views explaining a shape of an inner peripheral edge in an embodiment of a seal for a ball screw device, where FIG. 3A is a sectional view of a threaded shaft, FIG.3B is a sectional view of the threaded shaft, FIG. 3C is a front view of a seal member in this embodiment, and FIG. 3D is a front view of a conventional seal member;
FIGS. 4A to 4F are views illustrating a structure in another embodiment of a seal for a ball screw device, where FIG.4A to FIG. 4F are partial sectional views; and
FIG. 5 is a view explaining proximity in another embodiment of a seal for a ball screw device.

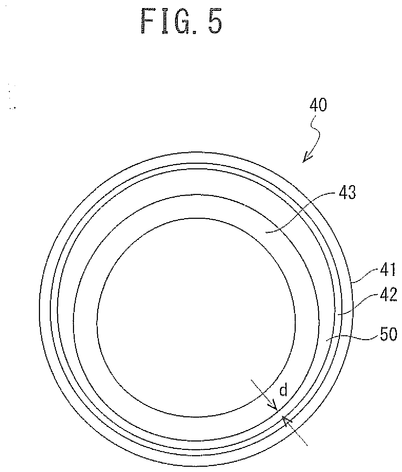

The embodiment of FIG. 5 does not belong to the invention but is helpful for its understanding.

### Description of Embodiments

In the detailed explanation below, a number of specific details are described so as to provide complete understanding of embodiments of the present invention. However, without such specific details, it will be obvious that one or more embodiments can be carried out. In addition, in order to simplify the drawings, known structures and devices are illustrated in outline views.

Herein below, embodiments of a seal for a ball screw device according to the present invention are explained with reference to the drawings. In this specification, a longitudinal direction in which a threaded shaft extends is regarded as an axis direction, and a direction orthogonal to the axis direction is referred to as a radial direction. Also, for a nut and a seal member, these directions are similar in a state of being assembled to a threaded shaft.

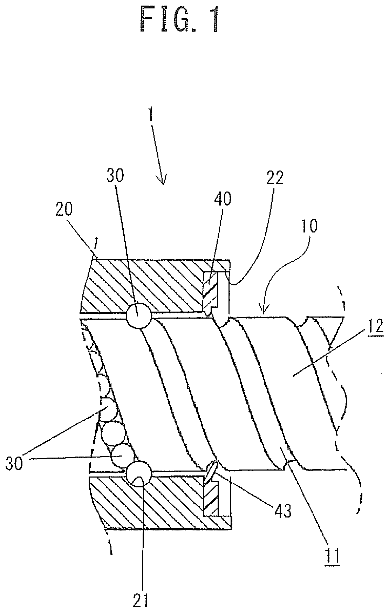

FIG. 1 is a partial sectional view of a main part, illustrating a structure in an embodiment of a seal for a ball screw device.

### (Structure of a ball screw device)

As illustrated in FIG. 1, a seal for a ball screw device according to this embodiment is provided in a ball screw device 1 that is provided with a threaded shaft 10, a nut 20, and balls 30. The nut 20 is fitted to the threaded shaft 10 with a given gap, and an inner diameter of the generally cylindrical nut 20 is larger than an outer diameter of the threaded shaft 10.

In an outer peripheral surface of the threaded shaft 10, a helical rolling groove 11 having a generally semicircular shaped section is provided. Further, in an inner peripheral surface of the nut 20, a helical rolling groove 21 having a generally semicircular shaped section is provided using the same lead as the rolling groove 11. Either of these semicircular shapes has a curvature radius larger than a radius of the ball 30. Then, the balls 30 are interposed, so as to be able to roll, inside a raceway that has a generally circular shaped section and is formed by these rolling grooves 11, 21, and the nut 20 is screwed into the threaded shaft 10 through these balls 30. By forming such a structure, the ball screw device is able to move the nut 20 in the axis direction of the threaded shaft 10 by rotating the threaded shaft 10.

### (Seal for a ball screw device)

In both end parts of the nut 20 in the axis direction, circular shaped recessed parts 22 for mounting the seal members are formed, respectively (FIG. 1 only illustrates the recessed part 22 on one side) . On an inner diameter side of each of the recessed parts 22, an annular seal member 40 is provided, which is fitted onto the threaded shaft 10 and used for sealing a gap between the nut 20 and the threaded shaft 10.

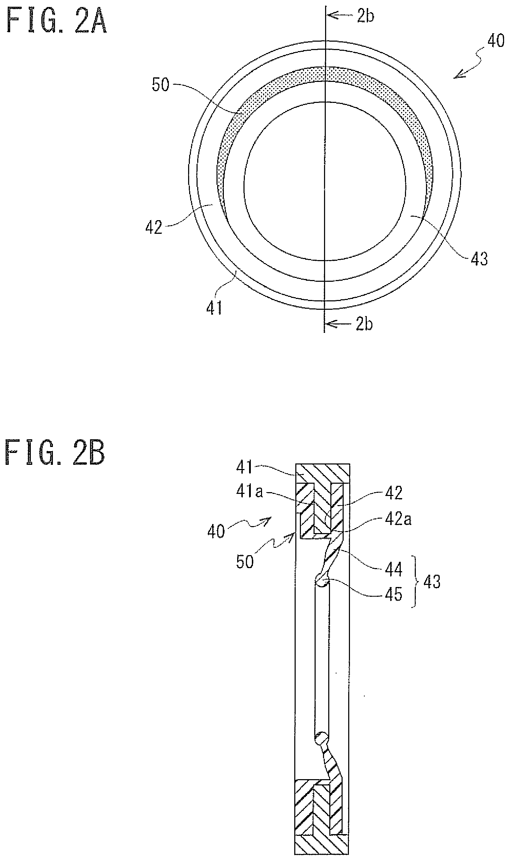

FIGS. 2A and 2B are views illustrating a structure of a seal member 40, where FIG.2A is a front view (an external view seen in the axis direction of the threaded shaft 10), and FIG. 2B is a sectional view along 2b-2b in FIG. 2A.

As illustrated in FIG. 2A and 2B, the seal member 40 has an annular core material 41 on an outer diameter side, an annular body part 42 fixed to an inner peripheral side of the core material 41, and a lip part 43 that is formed to project inwardly in a radial direction from an inner diameter part of the body part 42. The lippart 43 is formed across an entire circumference in a circumferential direction. An inner diameter side of the lip part 43 is an opening, and the threaded shaft 10 is inserted into the opening.

The core material 41 is made from metal or hard synthetic resin, and is formed into a circular shape . A projecting part 41a projecting inwardly in the radial direction is formed in the core material 41, and a recessed part 42a corresponding to this projecting part 41a is formed in an outer peripheral surface of the body part 42, and, the body part 42 is fixed to the core material 41 as these projecting part 41a and the recessed part 42a are fitted to each other. The body part 42 and the lip part 43 are formed from a soft elastic material such as elastomer and rubber. The body part 42 and the lip part 43 are formed integrally from the same material. The seal member 40 structured like this is fixed to the nut 20 by fitting an outer peripheral surface side of the core material 41 to the inner peripheral surface of the recessed part 22 of the nut 20.

As illustrated in FIG. 2B, the lip part 43 is structured from a seal piece 44 that is inclined and extends outwardly in the axis direction of the nut 20 from the inner diameter part of the body part 42, and a sliding contact part 45 that is formed in an end part of the seal piece 44 on an inner diameter side. The sliding contact part (inner peripheral edge part) 45 is a part that comes into sliding contact with the outer peripheral surface of the threaded shaft 10.

The seal piece 44 is formed into a shape that resembles the shape of a truncated conical side surface part, and is formed across the entire circumference in the circumferential direction. A sectional shape of the sliding contact part 45 is formed into a generally circular shape, and is formed across the entire circumference of the end part of the seal piece 44 on the inner diameter side. Therefore, the sliding contact part 45 forms an annular part that continues generally annularly. The seal member 40 seals a gap between the nut 20 and the threaded shaft 10 as the sliding contact part 45 of the lip part 43 comes into sliding contact with the outer peripheral surface of the threaded shaft 10. In particular, by making the sectional shape of the sliding contact part 45 into a generally circular shape, it is possible to maintain a contact state between the sliding contact part 45 and the threaded shaft 10 constant regardless of a contact position of the sliding contact part 45 with the threaded shaft 10 (for example, a contact position with a groove surface of the rolling groove 11 inside the rolling groove 11 of the threaded shaft 10).

As illustrated in FIG. 2B, a diameter dimension of the section of the sliding contact part 45 is formed to be larger than a thickness dimension of the end part of the seal piece 44 on the inner diameter side. By forming the sliding contact part 45 as stated above, the sliding contact part 45 in a state of sliding against the threaded shaft 10 is restrained from being deformed. Further, the diameter dimension of the section of the sliding contact part 45 is formed to be smaller than a width dimension of the rolling groove 11 of the threaded shaft 10. By forming the sliding contact part 45 as stated above, a contact area of the sliding contact part 45 with the threaded shaft 10 is reduced, thereby suppressing frictional resistance of the seal member 40 to the threaded shaft 10 to be small.

By arranging the seal member 40 while making the lip part 43 inclined in the direction illustrated in FIG. 1, namely, outwardly in the axis direction of the nut 20 (synonymous with the axis direction of the threaded shaft 10), entry of dust and so on from outside into the gap between the nut 20 and the threaded shaft 10 is effectively prevented. When the seal member 40 is arranged while making the lip part 43 inclined inwardly in the axis direction of the nut 20 from the body part 42, it is possible to effectively prevent leakage of lubricant in a case where the lubricant is interposed between the nut 20 and the threaded shaft 10.

As illustrated in FIG. 2A, a shape of an inner peripheral edge of the seal member 40 seen in the axis direction, namely, a shape of the sliding contact part 45 of the lip part 43 seen in the axis direction is a non-circular shape (a circular shape different from a generally perfect circle) in which a plurality of arcs projecting outwardly in the radial direction is combined. The neighboring arcs smoothly continue from each other. In the following explanation, the shape of the sliding contact part 45 of the lip part 43 seen in the axis direction is referred to as a "shape of an inner peripheral edge of the seal member 40".

### [Shape of an inner peripheral edge of a seal member]

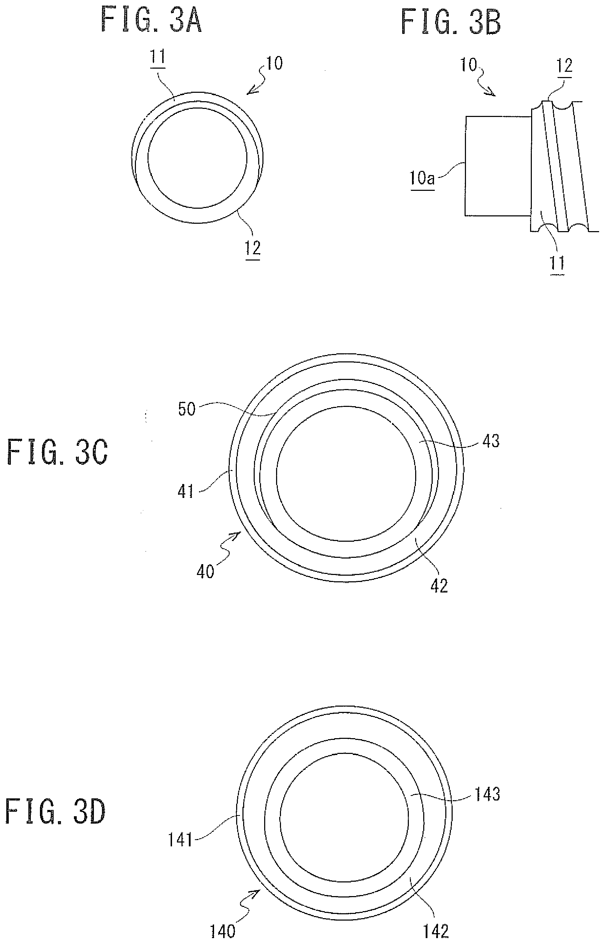

Here, the shape of the inner peripheral edge of the seal member 40 is explained in further detail with reference to FIGS. 3A to 3D. FIGS. 3A to 3C are views explaining the shape of the inner peripheral edge of the seal member 40 in this embodiment, where FIG. 3A is a sectional view of the threaded shaft, FIG.3B is a side view of the threaded shaft, FIG.3C is a front view of the seal member of the this embodiment, and FIG.3D is a front view of a conventional seal member. As illustrated in FIG. 3C, since the shape of the inner peripheral edge of the seal member 40 is gradually shifted compared to the circular shape made by the core material 41, it is hard to distinguish which part of the seal member 40 is a part that abuts on the rolling groove 11 of the threaded shaft 10.

Here, in a case where the seal member 40 is inserted from an end part 10a (see FIG. 3B) of the threaded shaft 10, unless the seal member 40 is inserted after matching the phases of the inner periphery of the seal member 40 and the section of the threaded shaft 10, the seal member 40 is forced to be pushed into the threaded shaft 10. This leads to damage to the seal member 40. In a conventional seal member 140 illustrated in FIG. 3D, since nothing can become a marker for matching phases of an inner periphery of a seal member 40 and a section of a threaded shaft 10, it has been difficult to match the phases accurately when the seal member 140 is inserted into the threaded shaft 10. In Fig. 3D, reference numerals 141, 142, 143 are members that correspond to "the core material 41", "the body part 42", and "the lip part 43", respectively, in FIG. 2A and FIG. 3C.

Here, as illustrated in FIG. 2B and FIG. 3C, in the seal member 40 in this embodiment, a guide part 50 is provided, which corresponds to an inner peripheral edge part (sliding contact part 45) that is in sliding contact with the rolling groove 11 of the threaded shaft 10 or a land part 12 between the rolling grooves 11, 11. This guide part 50 is indicated by hatching in FIG. 2A.

This guide part 50 is provided in at least one of end surfaces (only one end surface in FIG. 2 B) of the seal member 40 in the axis direction (parallel to the axis direction of the threaded shaft 10), and is provided in a shape projecting or recessed in the foregoing axis direction with respect to the end surface. The range where the guide part 50 corresponding to the rolling groove 11 of the threaded shaft 10 is provided is at 240° or smaller in the circumferential direction of the seal member 40 as illustrated in FIG. 2A.

As explained so far, as the guide part 50 provided to correspond to the rolling groove 11 is provided in the seal member 40, an operator is able to match the phases of the threaded shaft 10 and the seal member 40 easily and surely while visually recognizing the guide part 50 from the axis direction. Further, since the seal member 40 is mounted on the threaded shaft 10 with accurate phases while visually recognizing the guide part 50 from the axis direction, it is less likely that the seal member 40 is broken. As a result, no more damage to the seal member, a mounting error and mounting failure happen, and it becomes possible to reduce grease leakage, wobble, and noise when the ball screw device is operating.

This guide part 50 is intentionally formed integrally with the seal member 40 (body part 42), and, for example, even when a joint between the core material 41 and the body part 42 ended up becoming a marker having a similar function as the guide part 50, that is not regarded as the guide part.

### (Other embodiments)

Next, other embodiments of a seal for a ball screw device according to the present invention are explained with reference to the drawings. In the explanation of these embodiments, only the shape of the guide part 50 is different assuming that the guide part is provided in at least one of end surfaces of the seal member 40 in the axis direction in a portion corresponding to the inner peripheral edge part that is in sliding contact with the rolling groove 11 or the land part 12 of the threaded shaft 10. Therefore, explanation of similar structure, actions, and effects to those of the foregoing embodiment are omitted.

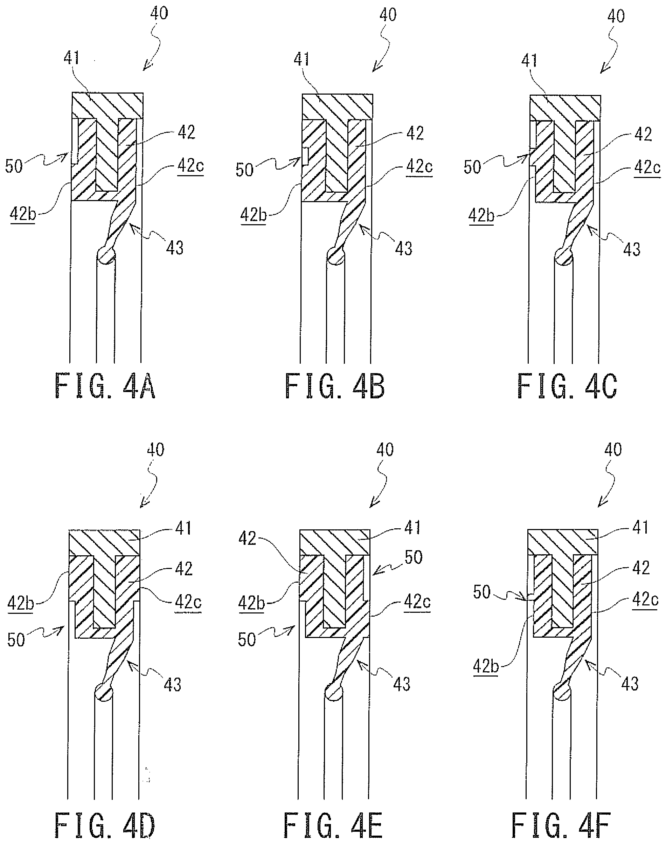

FIGS. 4A to 4F are views illustrating a structure of a seal for a ball screw device in other embodiments, where FIGS. 4A to 4F are sectional views of a part where the inner peripheral surface of the seal member is in contact with the threaded shaft 10. In the foregoing embodiment, as illustrated in FIG. 2B, the recessed part is formed on the inner peripheral side of the body part 42 as the guide part 50, but the form of the guide part 50 provided in the seal member 40 may be forms illustrated in FIGS. 4A to 4F.

Specifically, as illustrated in FIG. 4A, such a form may be possible that a recessed part is formed in an outer peripheral side of the body part 42 as the guide part 50. Further, as illustrated in FIG. 4B, such a form may be possible that a recessed part (groove shape) is formed as the guide part 50 near a central part of the body part 42. Moreover, as illustrated in FIG. 4C, such a form is possible that a projecting part is formed as the guide part 50 near the center part of the body part 42.

Moreover, as illustrated in FIGS. 4D, 4E, such a form is possible that a recessed part (cutout) is formed as the guide part 50 in both end surfaces 42b, 42c of the body part 42 in the axis direction. This form is in contrast to the form where the guide part 50 illustrated in FIG. 2B and FIGS. 4A to 4C are provided in only one of end surfaces 42b of the body part 42 in the axis direction (parallel to the axis direction of the threaded shaft 10). As stated above, by providing the guide part 50 on both end surfaces 42b, 42c of the body part 42 in the axis direction, it is not necessary to consider an installing direction of the seal member 40 in the axis direction, and an effect of improving versatility of the seal member 40 is obtained. The form illustrated in FIG. 4D is a form in which the form of the guide part 50 illustrated in FIG. 2B is combined in both end surfaces 42b, 42c of the body part 42 in the axis direction. Further, the form illustrated in FIG. 4E is a form in which the form of the guide part 50 illustrated in FIG. 2B and the form of the guide part 50 illustrated in FIG. 4A are combined on both end surfaces 42b, 42c of the body part 42 in the axis direction.

Further, as illustrated in FIG. 4E, such a form is possible that the guide part 50 is provided by forming a visible minute projection in one of end surfaces 42b of the body part 42 in the axis direction.

Moreover, in the foregoing embodiment, the guide part 50 is provided in the body part 42 by using the rolling groove 11 as a reference, but similar effects are obtained even when the guide part 50 is provided by using the land part 12 as a reference.

Furthermore, as a form of the guide part 50 provided in the seal member 40, the guide part 50 having a recessed shape or a projecting shape may be provided on either side in the axis direction, the guide part 50 may be provided continuously in the circumferential direction, and a plurality of separated guide parts 50 may be provided in a line in the circumferential direction.

Thus, a noncircular shape of the seal member 40, and a portion to be aligned with the positions of the rolling groove 11 and the land part 12, which could not be visually clear, become clear, thereby making it easier to match phases when the seal member 40 is inserted into the threaded shaft 10.

### [Proximity]

Here, for example, the guide part 50 illustrated in FIG. 2 (b) has the same shape as the shape of the inner peripheral edge part (sliding contact part 45) of the seal member 40, but the guide part 50 is not necessarily provided so as to be in adjacent to the inner peripheral edge of the seal member 40. As illustrated in FIG. 5, a minimum value of a gap (proximity) d between the guide part 50 and the inner peripheral edge of the seal member 40 is preferably within 1/20 of an outer diameter of the threaded shaft 10.

The seal for a ball screw device according to this embodiment is suitable for a ball screw device used in, for example, an actuator and so on. Further, for example, the seal for a ball screw device may be a seal member used for a roller screw device instead of the foregoing ball screw device.

Although the present invention has been explained so far with reference to specific embodiments, the explanation is not intended to limit the present invention. With reference to the explanation of the present invention, various changes may be made without departing from the scope of the invention as defined by the appended claims.

### Reference Signs List

- 10: threaded shaft
- 11: rolling groove
- 20: nut
- 21: rolling groove
- 30: ball (rolling element)
- 40: seal member
- 50: guide part

## Claims

1. A ball screw device comprising:
a seal having a non circular inner peripheral surface;
a threaded shaft (10) extending in an axis direction and having a helical rolling groove (11) provided in an outer peripheral surface, and
a cylindrical shaped nut (20) having a rolling groove (21), which faces the rolling groove (11), in an inner peripheral surface, and screwed into the threaded shaft (10) through a plurality of balls (30) arranged between the rolling groove (21) and the rolling groove (11) of the threaded shaft (10),
the seal for a ball screw device comprising:
a seal member (40) provided on an inner diameter side of the nut (20), which seals a gap between the nut (20) and the threaded shaft (10) in both end parts of the nut (20) in the axis direction by sliding contact of an inner peripheral edge part with an outer peripheral surface of the threaded shaft (10); and
a guide part (50) which is provided adjacent to the inner peripheral edge of the seal member (40) and being provided in at least one of end surfaces of the seal member (40) in the axis direction, which has projections or recessed parts in the axis direction in a portion corresponding to the inner peripheral edge part that is in sliding contact with the rolling groove (11) of the threaded shaft (10) or a land part between the rolling grooves (11, 21),
**characterized in that** the guide part (50) is provided in a shape projecting or recessed in the axis direction and a size of the guide part (50) in a radial direction gradually increases and decreases at least at 240° or smaller in the circumferential direction of the seal member (40), the guide part (50) being used for matching the phases of the threaded shaft (10) and the seal member (40).

2. The ball screw device according to claim 1, wherein the guide part (50) is provided in both end surfaces of the seal member (40) in the axis direction.

3. The ball screw device according to claim 1 or 2, wherein the guide parts (50) are provided in a plurality of lines in the circumferential direction of the threaded shaft (10).

## Patentansprüche

1. Kugelspindelvorrichtung, umfassend:
eine Dichtung mit einer nicht-kreisförmigen Umfangsfläche;
eine Gewindewelle (10), die sich in Achsenrichtung erstreckt und eine spiralförmige Wälznut (11) aufweist, die in einer äußeren Umfangsfläche vorgesehen ist, und
eine zylindrisch geformte Mutter (20) mit einer der Wälznut (11) zugewandten Wälznut (21) in einer inneren Umfangsfläche und welche in die Gewindewelle (10) über eine Mehrzahl von Kugeln (30) eingeschraubt ist, die zwischen der Wälznut (21) und Wälznut (11) der Gewindewelle (10) angeordnet sind,
wobei die Dichtung für eine Kugelspindelvorrichtung umfasst:
ein Dichtungselement (40), das auf einer Innendurchmesserseite der Mutter (20) vorgesehen ist und einen Spalt zwischen der Mutter (20) und der Gewindewelle (10) in beiden Endteilen der Mutter (20) in Achsenrichtung durch Gleitkontakt eines inneren Umfangskantenteils mit einer äußeren Umfangsfläche der Gewindewelle (10) abdichtet; und
ein Führungsteil (50), das neben der inneren Umfangskante des Dichtungselements (40) vorgesehen ist und in mindestens einer der Endflächen des Dichtungselements (40) in Achsenrichtung vorgesehen ist, das Vorsprünge oder vertiefte Teile in der Achsenrichtung in einem Abschnitt aufweist, der dem inneren Umfangskantenteil entspricht, der in Gleitkontakt mit der Wälznut (11) der Gewindewelle (10) oder einem Stegteil zwischen den Wälznuten (11, 21) steht;
**dadurch gekennzeichnet, dass** das Führungsteil (50) in einer in Achsenrichtung vorspringenden oder vertieften Form vorgesehen ist und eine Größe des Führungsteils (50) in radialer Richtung allmählich mindestens bei 240 ° oder weniger in Umfangsrichtung des Dichtungselements (40) zunimmt und abnimmt, wobei das Führungsteil (50) zum Anpassen der Phasen der Gewindewelle (10) und des Dichtungselements (40) verwendet wird.

2. Kugelspindelvorrichtung nach Anspruch 1, wobei das Führungsteil (50) in beiden Endflächen in Achsenrichtung des Dichtungselements (40) vorgesehen ist.

3. Kugelspindelvorrichtung nach Anspruch 1 oder 2, wobei die Führungsteile (50) in einer Mehrzahl von Leitungen in Umfangsrichtung der Gewindewelle (10) vorgesehen sind.

## Revendications

1. Dispositif de vis à billes comprenant :
un joint ayant une surface périphérique interne non circulaire ;
une tige filetée (10) s'étendant dans une direction axiale et ayant une rainure de roulement (11) hélicoïdale prévue dans une surface périphérique externe, et
un écrou de forme cylindrique (20) ayant une rainure de roulement (21) qui fait face à la rainure de roulement (11), dans une surface périphérique interne, et vissée sur la tige filetée (10) par le biais d'une pluralité de billes (30) agencées entre la rainure de roulement (21) et la rainure de roulement (11) de la tige filetée (10),
le joint pour un dispositif de vis à billes comprenant :
un élément de joint (40) prévu sur un côté de diamètre interne de l'écrou (20), qui scelle un espace entre l'écrou (20) et la tige filetée (10) dans les deux parties d'extrémité de l'écrou (20) dans la direction axiale par contact coulissant d'une partie de bord périphérique interne avec une surface périphérique externe de la tige filetée (10) ; et
une partie de guidage (50) qui est prévue de manière adjacente au bord périphérique interne de l'élément de joint (40) et étant prévue dans au moins l'une des surfaces d'extrémité de l'élément de joint (40) dans la direction axiale, qui a des saillies ou des parties évidées dans la direction axiale dans une partie correspondant à la partie de bord périphérique interne qui est en contact coulissant avec la rainure de roulement (11) de la tige filetée (10) ou une partie d'appui entre les rainures de roulement (11, 21),
**caractérisé en ce que** la partie de guidage (50) est prévue dans une forme faisant saillie ou évidée dans la direction axiale et une taille de la partie de guidage (50) dans une direction radiale augmente progressivement et diminue au moins à 240° ou moins dans la direction circonférentielle de l'élément de joint (40), la partie de guidage (50) étant utilisée pour faire correspondre les phases de la tige filetée (10) et de l'élément de joint (40).

2. Dispositif de vis à billes selon la revendication 1, dans lequel la partie de guidage (50) est prévue dans les deux surfaces d'extrémité de l'élément de joint (40) dans la direction axiale.

3. Dispositif de vis à billes selon la revendication 1 ou 2, dans lequel les parties de guidage (50) sont prévues dans une pluralité de lignes dans la direction circonférentielle de la tige filetée (10).
